# EUROPÄISCHE PATENTSCHRIFT

(11) **EP 1 412 821 B1**
(45) Veröffentlichungstag und Bekanntmachung des Hinweises auf die Patenterteilung: **14.09.2005**
(21) Anmeldenummer: 02758104.0
(22) Anmeldetag: 18.07.2002
(51) Int. Cl.: G05B 9/03, G05B 13/04

(54) **REKONFIGURATIONS-VERFAHREN FÜR EIN SENSORSYSTEM MIT ZUMINDEST EINEM SATZ VON BEOBACHTERN ZUR AUSFALLKOMPENSATION UND SICHERSTELLUNG EINER MESSWERTGÜTE**
RECONFIGURATION METHOD FOR A SENSOR SYSTEM COMPRISING AT LEAST ONE SET OF OBSERVERS FOR FAILURE COMPENSATION AND GUARANTEEING MEASURED VALUE QUALITY
PROCEDE DE RECONFIGURATION DESTINE A UN SYSTEME DE CAPTEUR ET COMPRENANT AU MOINS UN JEU D'OBSERVATEURS POUR LA COMPENSATION DE DEFAILLANCES ET LA GARANTIE D'UNE QUALITE DES VALEURS MESUREES

(30) Priorität: 20.07.2001 DE 10135586
(43) Veröffentlichungstag der Anmeldung: 28.04.2004
(73) Patentinhaber: EADS Deutschland GmbH, 85521 Ottobrunn (DE)
(72) Erfinder: KÖHLER, Thomas, 81739 München (DE); LOHMILLER, Winfried, 81373 München (DE)
(86) Internationale Anmeldenummer: PCT/DE2002/002638
(87) Internationale Veröffentlichungsnummer: WO 2003/017011

(56) Entgegenhaltungen:
- EP-A- 1 096 122
- WO-A-01/35176
- DE-A- 19 545 719
- US-A- 5 582 021

## Beschreibung

Die Erfindung betrifft ein zur Implementierung in ein Computersystem vorgesehenes Rekonfigurations-Verfahren zur Kompensation von Ausfällen eines Sensorsystems mit zumindest einem Satz von Beobachtern zur Ausfallkompensation und Sicherstellung einer Meßwertgüte sowie ein Sensorsystem zur Durchführung des Verfahrens.

Die Erfindung betrifft insbesondere ein zur Implementierung in ein Computersystem vorgesehenes Rekonfiguratiens-Verfahren sowie ein entsprechenden Sensorsystem zur Kompensation von Ausfällen des Sensorsystems mit zumindest zwei konfigurierbaren Beobachtern, der jeweils zumindest einen Sensor zur Messung von System-Zuständen eines Anwendungssystems und zumindest ein Systemmodell zur Beschreibung des Anwendungssystems unter Bildung zumindest eines ersten Beobachters zur Schätzung von System-Zuständen aufweist, um Systemzustände einer zugeordneten Datenverarbeitungseinrichtung bereitzustellen, wobei for einen ersten Beobachter Ausfallzustände aus Abweichungswerten ermittelt werden, die sich aus dem Vergleich einer Anzahl von mittels des zumindest einen Sensors gemessenen Zuständen mit einem mittels des System modells geschätzten Zustand ergeben.

Die DE 36 38 131 A1 offenbart eine Steuereinheit, in der für zwei Wärmefühler Temperaturschwellenwerte gespeichert sind. Es wird für den Fall eines Ausfalles eines Sensors, d.h. bei einer nicht tolerierbaren Abweichung von einem Sollwert, ein Ersatzwert verwendet Der Ersatzwert ist konstant und für jeden Betriebszustand identisch und stellt ein Differenzwert der Temperaturen in bezug auf einen Normalfall dar. Der jeweilige Temperaturwert wird mittels einer bestimmten Addition bzw. Subtraktion ermittelt.

Die DE 197 05 766 C1 offenbart eine Steuereinrichtung für eine Brennkraftmaschine, der verschiedene Sensoren wie einen Pedalstellungsgeber, einen Luftmassensmesser oder einen Temperatursensor umfaßt. Weiterhin werden Betriebsgrößen wie ein Umgebungsdruck oder ein Abgasgegendruck über einen Kennfeldzusammenhang oder von einem Beobachter ermittelt. Mit den von der Steuereinrichtung ermittelten Stellgrößen werden Stellgeräte mit jeweils einem Stellantrieb und einem Stellglied angesteuert. Als Stellglieder ist eine Drosselklappe, ein Einspritzventil, eine Zündkerze oder ein Umschalter zwischen zwei verschiedenen Saugrohrlängen vorgesehen. Eine Überwachungseinrichtung überwacht mindestens einen Sensor. Mittels der Sensoren und des Beobachters werden verschiedene Sensorwerte bzw. Schätzwerte derselben und daraus abgeleitete Größen ermittelt. Aus dem Überschreiten entsprechend vorgegebener Schwellwerte wird nach einem vorgegebenen Schema auf die Fehlerhaftigkeit bestimmter Sensoren geschlossen.

Die WO 94/12948 A1 offenbart ein Verfahren und eine Einrichtung zum Betreiben eines neuronalen Netzwerkes mit fehlenden und/oder unvollständigen Daten. Ein Entscheidungsporzessor ist vorgesehen zur Überwachung einer Ausgabe-Überwachung und variiert oder verhindert die Ausgabe derselben, wnn der Ausgang eines Unsicherheitsmodells einen vorbestimmten Schwellwert überschreitet. Als Eingang für den Entscheidungprozessor wird ein Wahrscheinlichkeitswert für die Zuverlässigkeit des Ausangs verwendet, der während einer Trainingsphase für einen vorbestimmten Wertebereich ermittelt wird.

Technisch realisierbare Sensor-Systeme oder Meß-Systeme weisen immer eine "Abweichung" (engl: deviation) von einem idealen Systemzustand auf. Sofern diese Abweichungen nicht die notwendige (spezifizierte) Genauigkeit (der Ausgangsinformationen) verletzen, spricht man von "Fehlern" (engl: errors) oder auch nichtkalibrierbaren Restfehlern. Die Bedeutung des Wortes Fehler beinhaltet in diesem Zusammenhang nicht die Implikation, das es sich um einen korrekturwürdigen Zustand handelt, sondern vielmehr um eine akzeptierte "Abweichung". Wenn diese Abweichungen aufgrund von aufgetretenen Hardware Defekten, Software Fehlern oder durch Unzulänglichkeiten bei der Systemmodellierung die notwendige (spezifizierte) Genauigkeit der Ausgangsinformationen verletzen, wird von "Ausfällen" (engl: failure) gesprochen.

Ein System wird als "ausfall-tolerant" (engl: failure tolerant) bezeichnet, wenn es Ausfälle interner Komponenten (interne Ausfälle), die zu Ausfällen der Ausgangsinformationen führen können, rechtzeitig erkennt und durch geeignete Maßnamen oder Rekonfigurationen verhindert, daß die Ausgangsinformation die notwendige (spezifizierte) Genauigkeit verletzt.

Aus dem Stand der Technik sind Beobachter zur Schätzung von Zuständen, die bei Prozessen oder Abläufen technischer Systeme auftreten, bekannt. Derartige Beobachter sind beispielsweise in "Regelungstechnik" von O. Föllinger, 1994, Hüthig GmbH auf den Seiten 405-407 beschrieben. Diese stellen eine Kombination aus Sensoren zur teilweisen oder vollständigen Messung eines momentanen Zustands und aus einem Systemmodell, welches das zeitliche Verhalten eines vordefinierten Systems zur analytischen Ermittlung des Zustandes beschreibt, dar. Ein aus Sensoren und dem Systemmodell gebildeter Beobachter, welcher eine vollständige Beschreibung des Systems zur Gegenwart darstellt, schätzt hierbei den Systemzustand. Ein solcher Beobachter kann generell ein Luenberger-Beobachter, ein Kalman-Filter, ein neuronales Netz oder ein anderes übliches Beobachterverfahren sein.

Aus dem Stand der Technik ist weiterhin bekannt, zur Fusion von Sensorsignalen mit einem Systemmodell einen Beobachter zu verwenden. Der Beobachter berücksichtigt dabei die angenommene Genauigkeit des Systemmodells sowie die angenommene Genauigkeiten der Sensorsignale in einer Weise, daß er diese möglichst optimal fusioniert.

Da der Systemzustand mindestens mit einem Sensor teilweise gemessen wird, kann aufgrund der Abweichung der Messwerte von der Erwartung der entsprechenden Schätzwerte des Systemmodells ein Ausfallzustand ermittelt werden. Nach Vergleich mit Schwellwerten liegt dann ein Ausfallstatus vor.

Mit Hilfe eines Kalman-Filters kann eine optimale Fusion aller Sensorsignale unter Verwendung einer vorbestimmten Gewichtung bewirkt werden. Dieses geschieht dadurch, daß im Systembetrieb verhältnismäßig ungenaue Sensorsignale oder Systemzustände des Systemmodells schwächer gewichtet werden als die genaueren Sensorsignale oder Systemzustände des Systemmodells, wobei bestimmte Genauigkeiten der Sensoren oder des Systemmodells angenommen werden. Die genannte Fusion kann jedoch nur dann optimal sein, wenn die angenommenen Genauigkeiten der Sensorsignale oder des Systemmodells mit den wahren Genauigkeiten der Sensorsignale oder Systemmodellen übereinstimmen. Im Falle eines Ausfalls eines Sensorsignals oder eines Systemmodells, also wenn die vorgegebene Genauigkeit eines oder mehrerer Sensoren oder des Systemmodells nicht eingehalten werden kann, verwendet der Beobachter die Sensorsignale oder die Systemzustände des Systemmodells nach wie vor in der ursprünglich vorgesehenen Gewichtung. Dabei wird also ein aufgrund der Vorgaben als genauer Sensor oder Systemzustand bewerteter Sensor oder Systemzustand in der Kombination mit anderen Sensorsignale oder Systemzustände auch dann relativ stark gewichtet, wenn er ungenaue Signale liefert. Der Beobachter wichtet in diesem Fall die verschiedenen Signale nicht mehr optimal, so daß sich insgesamt eine suboptimale Lösung durch den Beobachter ergibt. Dies kann zu einem erheblichen Genauigkeits-Verlust der Ausgangssignale des Beobachters führen.

Der beschriebene Nachteil gilt für jedes Beobachterverfahren nach dem Stand der Technik, und insbesondere auch für solche, die Kalman-Filter verwenden.

Um Sensor-Ausfälle oder Systemmodellierungs-Fehler zu erkennen und aus dem System zu entfernen, wurde daher auf der Basis der Beobachter-Technik eine sogenannte Beobachter- oder Kalman-Filter-Bank entwickelt, bei der mehrere Beobachter zeitlich nebeneinander verwendet werden. Ein solches System ist in der Druckschrift Bryson, A., Yu-Chi, H, Applied Optimal Control, 1975, auf den Seiten 388 und 389 veröffentlicht. Dabei verarbeitet ein Beobachter, Hauptbeobachter genannt, sämtliche zu verarbeitenden Sensorsignale mit einem Systemmodell, das sich auf ein System ohne Systemfehler bezieht. Die anderen Beobachter, sogenannte Unterbeobachter, bearbeiten demgegenüber eine Unterauswahl der zu verarbeitenden Sensorsignale in Kombination mit Systemmodellen, welche sich auf unterschiedliche Systemfehler beziehen. Welche Unterbeobachter in einer Beobachter-Bank verwendet werden sollten, hängt davon ab, welche Kombinationen von Sensorfehler und Systemfehler in Betracht kommen.

Jeder Beobachter der Beobachter-Bank ermittelt bei jeder Sensormessung ein sogenanntes Residuum, welches die Differenz zwischen dem gemessenen Sensorsignal und dem für diesen Zeitpunkt vom Beobachter über das Systemmodell erwartete Sensorsignal darstellt. Der Vergleich dieses Residuums mit einer erwarteten Größe oder Genauigkeit des Residuums erlaubt die Bestimmung der Wahrscheinlichkeitsdichte, daß die letzte Messung mit dem Systemmodell des Beobachters übereinstimmt. Unterschreitet diese Wahrschelnlichkeitsdichte einen gewissen Schwellwert, so wird dies als Ausfall behandelt. Um über die Zeit sich aufbauende Abweichungen als Ausfall zu erkennen sobald sie einen Ausfall darstellen, werden in der vorbekannten Beobachter-Bank bei der Beurteilung der Wahrscheinlichkeitsdichte der Residuen auch alle in der Vergangenheit aufgetretenen Residuen berücksichtigt. Die Wahrscheinlichkeitsdichte aller vergangenen Messungen wird mit Hilfe mathematischer Verfahren bestimmt. Im Falle eines detektierten Ausfalls, also wenn die Wahrscheinlichkeitsdichte vergangener Messungen in Verbindung mit dem Systemmodell, einen Wahrscheinlichkeits-Schwellwert unterschreiten, schaltet die Beobachter Bank auf den Unterbeobachter mit der in diesem Zeitpunkt höchsten Wahrscheinlichkeitsdichte um.

Ein Nachteil des bekannten Verfahrens ist, daß dieses nur zuverlässig beim Auftreten von Ausfällen funktioniert, die vorab definiert worden sind.

Aus der EP 1 096 122 A1 ist ein Verfahren zur Entdeckung von Sensorfehlern und zum Monitoren der Betriebsbedingungen eines Systems mit Sensoren und Beobachtern bekannt.

Aus der WO 01/35176 A2 ist ein Servo-Kontrollsystem sowie ein Verfahren zur Schätzung von Abweichungen in einem solchen Servo-Kontrollsystem offenbart, bei denen eine Fehlerrate des Servo-Kontrollsystems ermittelt wird. Aus den Fehlerraten werden skalare Positions-Fehlerwerte ermittelt und daraus über eine Schätzung absoluter Werte der tatsächliche Fehlerwert ermittelt.

Aus der DE 195 45 719 A1 ist ein Verfahren zur Regelung der Auslauftemperatur von Durchlauferhitzern durch individuelle Ansteuerung der einzelnen Heizelemente durch ihnen zugeordnete nichtlineare Regler offenbart. Dabei wird eine Schätzung von Durchfluß und internen Zustandsgrößen mittels nichtlinearer bzw. linearer Beobachter durchgeführt. Eine Überwachung des Systems erfolgt durch Auswertung der geschätzten Zustandsgrößen.

Aus der US-PS 5 582 021 ist ein Verfahren zur Steuerung einer Klimaanlage für ein Fahrzeug unter Verwendung von Sensoren bekannt. Bei einer Fehlfunktion eines Sensors werden Korrekturwerte auf der Basis eines Rechenmodells für die Umgebung ermittelt, die einem Schätzwert hinzuaddiert werden.

Es ist eine Aufgabe der Erfindung, ein Sensorsystem mit zumindest einem Satz von Beobachtern und ein Verfahren für eine Rekonfiguration des Sensorsystems bereitzustellen, mit dem eine verbesserte Genauigkeit im Falle eines Ausfalles erreicht wird.

Diese Aufgabe wird mit den Merkmalen des Anspruchs 1 gelöst. Weitere Ausführungsformen sind in den Unteransprüchen angegeben.

Das erfindungsgemässe zur Implementierung in ein Computersystem vorgesehene Rekonfigurations-Verfahren zur Kompensation von Ausfällen eines Sensorsystems weist zumindest einen Sensor zur Messung von System-Zuständen eines Anwendungssystems und zumindest ein Systemmodell zur Beschreibung des Anwendungssystems unter Bildung zumindest eines Beobachters zur Schätzung von System-Zuständen auf, um Systemzustände einer zugeordneten Datenverarbeitungseinrichtung bereitzustellen. Mit diesem Verfahren werden Ausfallzustände für einen Beobachter, d.h. eine erste Kombination aus einem Sensor und einem Systemmodell, aufgrund von Abweichungen ermittelt, die sich aus dem Vergleich einer Anzahl von dem zumindest einen Sensor gemessenen Zuständen mit einem von dem Systemmodell geschätzten Zustand ergeben. Bei Erreichen eines ersten Schwellwertes für die Abweichungen wird zumindest ein weiterer Beobachter, d.h. eine weitere Kombination aus einem Sensor und einem Systemmodell mit einem von der ersten Kombination gemessenen Systemzustand und einer Anzahl von Abweichungen initialisiert, wobei die von der weiteren Kombination ermittelten Systemzustände zur Weiterverarbeitung durch die Datenverarbeitungseinrichtung an diesselbe geschickt werden, sobald die erste Kombination einen zweiten Schwellwert erreicht hat.

Bei dem Rekonfigurations-Verfahren kann die erste Kombination von der weiteren Kombination initialisiert werden und Systemzustände zur Weiterverarbeitung durch die Datenverarbeitungseinrichtung an diesselbe geschickt werden, sobald die erste Kombination den ersten Schwellwert unterschreitet.

Beim Überschreiten des ersten Schwellwertes durch den ersten Beobachter kann derjenige weitere Beobachter ausgewählt werden, der die geringsten Abweichungen der System-Zustände über einen vorbestimmten vergangenen Zeitraum hinweg aufweist. Alternativ kann beim Überschreiten des ersten Schwellwertes durch den ersten Beobachter der weitere Beobachter nach einer vorbestimmten Reihenfolge ausgewählt werden.

Ein Vorteil des erfindungsgemäßen Verfahrens bzw. der erfindungsgemäßen Vorrichtung ist, daß die Beobachter-Bank durch ein Umschalten auf eine andere Beobachter-Konfiguration mit einer Untermenge von Sensorsignalen, die vor dem Ausfall aufgetretenen Sensorsignale des nun als fehlerbehaftet erkannten Hauptbeobachters nicht verwirft, da dessen Signale vor dem Ausfall ausreichend genau gewesen sind. Damit sind beispielsweise alle Lerneffekte, wie z.B. das Schätzen von Sensor-Offsets oder eine erhöhte Genauigkeit des Beobachters, welche durch das abgeschaltete Sensorsignal vor dem Ausfall erzeugt wurden, nicht verloren.

Für den Fall eines Ausfalls wird im Gegensatz zum Stand der Technik nicht auf einen Unterbeobachter umgeschaltet, der zwar gegenwärtig eine korrekte Systemmodellierung mit Systemfehler enthält, jedoch in der Vergangenheit das System nicht korrekt beschrieben hat, da dort der Systemfehler noch nicht aufgetreten war.

Durch die Berücksichtigung vergangener Werte wird eine unnötige Reduzierung der Beobachter-Genauigkeit vermieden.

Die erfindungsgemäße Lösung ist auch vorteilhaft in Bezug auf die nach dem internen Ausfall auftretende Genauigkeit. Erfindungsgemäß schaltet die Beobachter-Bank auf den entsprechenden Beobachter zurück, wenn die Abweichung des als ausgefallen erkannten Sensors oder Systemmodells vor dem Erkennen des Ausfalls so groß war, daß er auch noch nach dem Ausfall vorgenommene, d.h. zukünftige Wahrscheinlichkeitsdichte-Berechnungen beeinflußt. Damit wird im Gegensatz zum Stand der Technik bei einem Sensorausfall die Information zukünftiger, möglicherweise korrekter Sensorsignale des als ausgefallen eingestuften Sensors nicht verworfen. Bei einem Systemfehler wird erfindungsgemäß auf das korrekte Systemmodell ohne Systemfehler umgeschaltet, was auch zu einer Verbesserung der Genauigkeit der Ausgangssignale führt.

Gegenüber der erfindungsgemäßen Lösung kann bei dem Verfahren nach dem Stand der Technik der für die Vergangenheit relevante zuzüglich dem für die Zukunft relevanten Effekt, zu einem erheblichen Informationsverlust der Beobachter-Bank führen, da ein Großteil korrekter Sensorsignale verworfen wird bzw. nicht mit den als korrekt angesehenen Systemmodellen gearbeitet wird.

Im folgenden wird die Erfindung an Hand der beiliegenden Figuren beschrieben, die zeigen:
- Figur 1 ein erstes Beispiel für die Anwendung des erfindungsgemäßen Sensorsystems bzw. des erfindungsgemäßen Verfahrens, wobei von dem Sensorsystem äußere Zustände oder Bewegungszustände eines Anwendungssystems erfasst werden,
- Figur 2 ein zweites Beispiel für die Anwendung des erfindungsgemäßen Sensorsystems bzw. des erfindungsgemäßen Verfahrens, wobei von dem Sensorsystem innere Zustände oder Betriebszustände eines weiteren Anwendungssystems erfaßt werden, und
- Figur 3 ein Beispiel für eine im Sensorsystem vorgesehene Beobachterbank mit Darstellung eines beispielhaft aufgetretenen internen Ausfalls und dessen systemtechnische Behandlung in Zeitschritten k bis k+11.

Erfindungsgemäß ist ein Rekonfigurations-Verfahren für ein Sensorsystem 1 vorgesehen, wobei das Sensorsystem 1 mehrere Sensoren 2 zur Messung von Zuständen eines Anwendungssystems und zumindest ein Systemmodell 4 zur Beschreibung des Anwendungs-Systems 11 unter Bildung zumindest eines Satzes von Beobachtern 6 aufweist, um Zustände 10 des Anwendungssystems 11 mittels der Meßwerte an ein dem Sensorsystem zugeordnete Datenverarbeitungseinrichtung 14 bereitzustellen, wobei Ausfälle im Sensorsystem, Fehler in der Systemmodellierung oder Ausfälle im Anwendungssystem durch die Rekonfiguration kompensiert werden und Meßwerte optimierter Qualität bereitgestellt werden. Das jeweils verwendete, zumindest eine Systemmodell 4 kann ein analytisches, also durch Algorithmen formuliertes Modell, und/oder ein durch Listen und Zuordnungen beschriebenes Modell sein. Das Sensorsystem 1 weist ferner eine Berechnungseinheit 8 auf, in der Schnittstellen zu Anwendungssystemen und zu zugeordneten Datenverarbeitungseinrichtungen 14 sowie Systemfunktionen z.B. zur zeitlichen Bereitstellung von Werten verschiedener Funktionen des Sensorsystems 1 implementiert sind. Das erfindungsgemäße Rekonfigurationsverfahren kann in der Berechnungseinheit 8 oder an anderer Stelle im Sensorsystem 1 oder in einer Einheit außerhalb des Sensorsystems 1 implementiert sein.

Das beanspruchte Verfahren bzw. System bezieht sich also generell auf ein Sensorsystem, das Zustände eines Anwendungssystems bestimmt. Das Sensorsystem kann dabei in einem ersten generellen Fall dafür vorgesehen sein, Zustände zu messen, die ein System oder Anwendungssystem mittelbar bewirkt und in einem zweiten generellen Fall Zustände des Systems oder Anwendungssystems selbst, also dessen Betriebszustände zu messen.

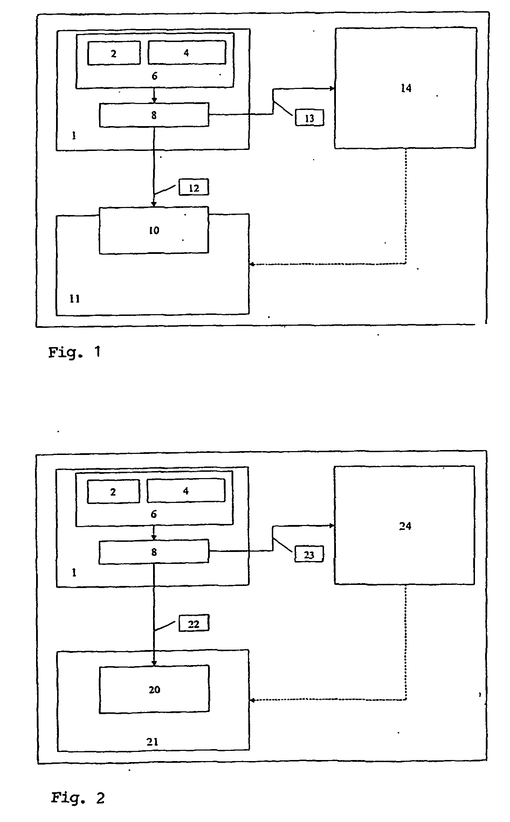

Im ersten Fall, bei dem mittels des erfindungsgemäßen Sensorsystems 1 äußere Zustände 10 gemessen werden und der in der Figur 1 dargestellt ist, kann es sich bei dem Anwendungssystem 11 beispielsweise um ein Fahrzeug (Land-, See- oder Luft-) und insbesondere ein Flugzeug, oder einen Roboter handeln. Bei einem Fahrzeug kann der äußere Zustand die Position oder Lage im Raum oder zeitliche Ableitungen davon umfassen. Die vom Sensorsystem 1 gemessenen Meßwerte für die äußeren Zustände (die Messung ist symbolisch mit dem Bezugszeichen 12 bezeichnet) werden im Sensorsystem 1 mittels dem zumindest einen Satz von Beobachtern 6 aus Sensoren 2 und zumindest einem Systemmodell 4 nach dem erfindungsgemäßen Verfahren fusioniert und in Form eines optimierten Zustandsvektors über eine Zuführung 13 einem dem Sensorsystem 1 zugeordneten Datenverarbeitungseinrichtung 14, die ein Kontrollsystem, ein Steuerungs-, Regelungs- oder Führungssystem sein kann, zur weiteren Verwendung zugeführt. Die Datenverarbeitungseinrichtung 14 kann insbesondere auch zur Steuerung des Anwendungssystems vorgesehen sein.

Das Sensorsystem 1 kann ein Navigationssystem und/oder ein Lagereferenz-System sein. Beispielsweise sind die Sensoren in diesem Anwendungsfall Inertialsensoren und das Systemmodell ein Modell, daß das Verhalten des Fahrzeugs aufgrund von Steuerkräften beschreibt. In diesem Fall handelt es sich bei dem Systemmodell also um ein analytisches Fahrzeugmodell. Ferner kann das Sensorsystem ein Luftdatensystem eines Flugzeugs sein, welches die Bewegungszustände Geschwindigkeit Höhe und Bezugswinkel zur umgebenden Luft beinhaltet. Beispielsweise kann das erfindungsgemäß vorgesehene Sensorsystem auch zur Erfassung z.B. der Position eines Roboters im Raum oder der Position und/oder Ausrichtung von Roboterarmen vorgesehen sein.

Die dabei auftretenden, durch das erfindungsgemäße Verfahren zu kompensierenden internen Ausfälle können
- das Systemmodell, und zwar durch Ungenauigkeiten bei der Wiedergabe des reellen Fahrzeugverhaltens oder systematische Modell-Fehler, oder
- die Sensoren, z.B. durch Ausfall oder Defekt eines oder mehrerer Sensoren,
betreffen.

Im zweiten, in der Figur 2 dargestellten Fall, bei dem mit dem Sensorsystem 1 innere Zustände oder Betriebszustände 20 zu messen sind, bezieht sich die erfindungsgemäße Anwendung auf ein mechanisches, chemisches oder elektrotechnisches Anwendungssystem 21, dessen innerer Zustand von einem dynamischen Prozess geprägt wird, der mechanisch, chemisch bzw. elektrotechnisch geprägt sein kann. Die vom Sensorsystem 1 gemessenen Meßwerte (die Messung ist symbolisch mit dem Bezugszeichen 22 bezeichnet) werden im Sensorsystem mittels zumindest eines Satzes von Beobachtern 6 aus Sensoren 2 und zumindest einem Modell 4 nach dem erfindungsgemäßen Verfahren fusioniert und in Form eines optimierten Zustandsvektors über eine Zuführung 23 einer dem Sensorsystem 1 zugeordneten Datenverarbeitungseinrichtung 24, die ein Kontroll- oder Steuerungs-System sein kann, zur weiteren Verwendung zugeführt.

Ein Beispiel für ein mechanisches System als Anwendungsfall des Anwendungssystems 11 ist ein Stellsystem, dessen Betriebszustände die Position und/oder die Geschwindigkeit eines Servoventils, eines Aktuators oder Drücke sein können. Die zu messenden Betriebszustände eines chemischen Anwendungssystems können Reaktionstemperaturen, Konzentrationen von miteinander reagierenden Stoffen, Drücke oder allgemein intrinsische oder extrinsische Parameter bzw. Eigenschaften jeder Art sein. Bei einem elektrischen System können die zu messenden Betriebszustände Ströme, Spannungen , Kapazitäten oder auch stoffliche oder chemische Eigenschaften sein.

Die für den zweiten, in der Figur 2 dargestellten Anwendungsfall auftretenden, durch das erfindungsgemäße Verfahren zu kompensierenden internen Ausfälle können betreffen:
- das Systemmodell, und zwar durch Ungenauigkeiten bei der Wiedergabe das reellen Fahrzeugverhaltens oder durch systematische Modell-Fehler, wobei das Systemmodell analytisch oder als Datensatz aufgrund einer aerodynamischen, chemischen oder andersartigen Kalibrierung vorliegen kann,
- die Sensoren, z.B. durch Ausfall oder Defekt eines oder mehrerer Sensoren, oder
- Abweichungen von Werten des Prozesses oder der Vorrichtung von Soll-Werten aufgrund von technischen Ausfällen, beispielsweise durch einen mechanischen Ausfall, oder ausgefallene Prozess-Steuerungen oder elektrische Ausfälle.

Die in der Figur 1 und der Figur 2 dargestellten Anordnungen aus Sensorsystem und Anwendungssystem sowie ihre funktionellen Zuordnungen können auch miteinander kombiniert sein. Dabei können insbesondere auch Sensorsystem mit Systemmodellen vorgesehen sein, die sowohl äußere Zustände als auch Betriebszustände erfassen. In solchen Anwendungen können jedoch auch Sensorsysteme derart zugeordnet sein, bei denen ein Sensorsystem äußere und ein anderes Betriebs-Zustände erfaßt.

Zusammenfassend ist das erfindungsgemäße rekonfigurierbare Sensorsystem zur Messung von Zuständen vorgesehen, wobei dem Sensorsystem eine Vorrichtung oder Datenverarbeitungs-Einrichtung wie eine Kontroll- oder Steuerungsvorrichtung zugeordnet ist, dem die erfaßten Meßgrößen zur weiteren Verarbeitung zuzuführen sind. Zu diesem Zweck müssen die Meßgrößen die geforderte Integrität und Verfügbarkeit aufweisen, wozu Sensor-Ausfälle und Systemmodellierungs-Fehler zu kompensieren sind. In den entsprechenden Anwendungen (zweiter Fall) ist ein Betriebszustand zu kontrollieren oder zu steuern oder zu regeln. Dabei sind zusätzlich die Bestimmungsgrößen der jeweiligen Betriebzustände mit bester Güte Verfügbarkeit und Integrität zu erfassen.

Alle genannten Ausfälle können für alle genannten Anwendungen erfindungsgemäß deshalb kompensiert und die Meßgrößen mit optimierter Qualität deshalb bereitgestellt werden, da es bei der Entscheidung, ob eine Umkonfiguration stattfinden soll, erfindungsgemäß lediglich auf die Abweichungen zwischen Sensorwerten und Werten des jeweils verwendeten Systemmodells, d.h. auf die sogenannten Residuen, ankommt und es keine Rolle spielt, ob die Ausfälle mit der Sensorik, dem Systemmodell oder gegebenenfalls mit einem weiteren zu überwachenden System zusammenhängt.

Das erfindungsgemäße Sensorsystem 1 ist insoweit ein ausfall-tolerantes System, da es genannte Ausfallarten, die im Sensorsystem 1 auftreten, kompensieren kann. Es kann jedoch auch als Ausfallerkennungssystem / Ausfallüberwachungssystem verwendet werden, da es Ausfälle eines externen Systems (das Anwendungssystem 11 bzw. 21), die sich auf äußere Zustände eines Anwendungssystems 10 (z.B. Bewegungszustände im Raum) oder auf Betriebszustände des Anwendungssystems 20 beziehen können, durch den Vergleich der fusionierten Werte mit Soll-Werten erkennen kann. Im Sensorsystem 1 wirkt eine Kombination von Sensoren und ein Systemmodell in einem Beobachter zusammen. Die Sensoren haben dabei vor allem in der eigentlichen Meßeinheit Hardware-Bestandteile. Ein Systemmodell kann nur in Software realisiert sein. Diese Anordnung schätzt einen Systemzustand und ist in der Lage, bei Sensorausfällen eine noch bestmögliche, durch Software ermittelte Schätzung des Systemzustands an andere Funktionen abzugeben.

Als Ausfallarten kommen demnach Sensor-Hardware-Defekte wie Software- oder System-Fehler in Betracht. Dabei ist zu beachten, daß sich eine Abweichung aufbauen kann bis sie zu einem Ausfall wird, da das erfindungsgemäße Verfahren in Zeitschritten abläuft. Ein in einem ersten Zeitschritt entstandene Abweichung setzt sich im folgenden Zeitschritt fort. Die zu messenden Zustände oder Zustandswerte sind zeitabhängig, ist so daß die Sensoren zeitabhängig Zustände erfassen.

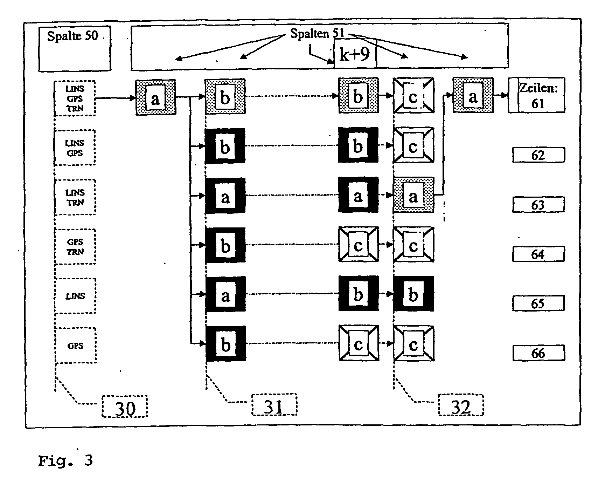

Im folgenden wird das erfindungsgemäße Rekonfigurations-Verfahren anhand von Figur 3 beschrieben, welche auf schematische Weise am Beispiel eines für Flugzeuge vorgesehenen Navigationssystems Sensoren und das erfindungsgemäße Umschalt- oder Rekonfigurations-Verfahren für einen beispielhaft angenommenen Sensorausfall zeigt.

Der Mechanismus oder das Rekonfigurations-Verfahren kann für verschiedene Systemmodelle angepaßt werden, indem verschiedene Sensorkombinationen 10 in Figur 3 durch verschiedene Systemmodelle ersetzt werden. Auch ist eine Kombination von Sensorkombinationen und verschiedener Systemmodelle möglich.

In der Figur 3 sind zeilenweise die Abweichungszustände mehrerer Sensoren und Sensorkombinationen des Sensorsystems 1 dargestellt, die beispielhaft für ein Navigationssystem in der Spalte 50 aufgelistet und mit den Kurznamen der jeweils vorgesehenen Sensoren bezeichnet sind. Als Kurznamen werden in der Figur 3 verwendet: LINS für Laser Inertial Navigation System, GPS für Global Positioning System und TRN für Terrain Reference Navigation System. Die von diesen Sensoren und Sensorkombinationen kommenden Signale stehen für den zumindest einen Satz von Beobachtern 6 bereit, wobei die Beobachter 6 je nachdem, ob deren Werte in der Datenverarbeitungseinrichtung 14 bzw. 24 verwendet werden oder nicht, als Hauptbeobachter bzw. Unterbeobachter bezeichnet werden. Dabei erhält in der dargestellten Ausführungsform und bei dem dargestellten Ausgangszustand der Hauptbeobachter (Zeile 61) die Sensorsignale einer LINS (Laser Inertial Navigation System), eines GPS (Global Positioning System) und eines TRN (Terrain Reference Navigation).

Das in der Figur 3 dargestellte Beispiel eines Sensor-bezogenen Teils eines Navigationssystems zeigt die Sensorsystemzustände sowie den zugehörigen Ausfallstatus oder Ausfallzustand 51 eines Hauptbeobachters und mehrerer Unterbeobachter jeweils in einer Mehrzahl von aufeinander folgenden Zeitschritten k bis k+11. Im dargestellten Beispiel werden zur Fusion der Sensoren mit dem Systemmodell Beobachter verwendet. Mit Systemzustand ist in diesem Fall die komplette gegenwärtige Beschreibung des jeweiligen Systems, d.h. die Werte aller wesentlicher durch den Beobachter zu einem aktuellen Zeitschritt ermittelten Größen, gemeint. Um einerseits die zeitliche Abfolge und andererseits die Gleichzeitigkeit dieser Eigenschaften darzustellen, sind diese in Zeilen 61, 62, 63, 64, 65, 66 und Spalten k bis k+11 angeordnet. Die Spalten k bis k+11 symbolisieren die dargestellten Zeitschritte, während in den Zeilen 61, 62, 63, 64, 65, 66 die in den jeweiligen Zeitschritten aktivierten Filter dargestellt sind. Dabei ist in der Zeile 61 der Hauptbeobachter oder erste Beobachter und in den Zeilen 62, 63, 64, 65, 66 die zur Verfügung stehenden Unterbeobachter oder weiteren Beobachter dargestellt. Dabei sind die Beobachter, die Werte an zugeordnete Datenverarbeitungseinrichtungen 14 bzw. 24 bereitstellen, d.h. zu einem Zeitschritt jeweils aktiv sind, mit gepunktet ausgefüllten Kästchen dargestellt sind, während die Beobachter, deren Werte zu einem Zeitschritt nicht verwendet werden, kurz gesagt inaktiv sind, mit grau ausgefüllten Kästchen dargestellt sind.

Mehrere zu einem Zeitschritt aktiven Beobachter werden als Beobachter-Bank bezeichnet. Die Beobachter bzw. Haupt- oder Unterbeobachter sowie die zugeordneten Systemmodelle selbst sind in der Figur 3 nicht dargestellt, sondern nur die Sensoren oder Sensor-Kombinationen (in Spalte 50 aufgelistet), die mit Systemmodellen in Verbindung stehen und zu bestimmten Beobachtern gehören. Diese Zuordnungen sind Einzelfall- und Anwendungs-abhängig und nach bekannten Kriterien (Genauigkeit, verfügbare Technologien, usw.) und Auslegungsverfahren festzulegen. Die an das jeweilige Datenverarbeitungs-Einrichtung übermittelten System-Zustände werden also jeweils durch eine Kombination aus zumindest einem Sensor zur Messung von System-Zuständen eines Anwendungssystems und zumindest ein Systemmodell zur Beschreibung des Anwendungssystems unter Bildung zumindest eines Satzes von Beobachtern zur Schätzung von System-Zuständen ermittelt. Darartige Kombinationen werden im folgenden kurz Kombination genannt.

Der Hauptbeobachter oder erste Beobachter sowie die Unterbeobachter oder weiteren Beobachter verwenden als aktuelle Sensorsignale die Signale von verschiedenen Sensoren 50. Dabei ist der Hauptbeobachter aus einer vorbestimmten Kombination aus zumindest einem Sensor und zumindest einem Systemmodell (in der Figur 3 nicht gezeigt) gebildet, wobei der Hauptbeobachter oder erste Beobachter die Signale vorzugsweise einer Maximalzahl oder einer ersten Auswahl von Sensoren verwendet, um eine möglichst hohe Genauigkeit und Meßqualität zu haben, während die Unterbeobachter oder weiteren Beobachter die Signale einer Unterkombination aus dieser Maximalzahl bzw. der ersten Auswahl von Sensoren verwenden. Die dabei verwendeten Systemmodelle können dabei unterschiedlich sein.

Diese Sensoren sind in der in der Figur 3 dargestellten Ausführungsform beispielhaft für ein Navigationssystem vorgesehen. Für andere Navigationssysteme sowie für Sensorsysteme, die für andere Anwendungen vorgesehen sind (Figuren 1 und 2), kommen andere Sensoren und damit Hauptbeobachter und Unterbeobachter in Betracht. Der Mechanismus kann auch für verschiedene Systemmodelle angepaßt werden, indem die verschiedenen Sensorkombinationen 10 durch verschiedene Systemmodelle ersetzt werden. Auch ist eine Kombination von Sensorkombinationen und verschiedener Systemmodelle möglich.

Die Figur 3 zeigt den zeitlichen Ablauf beispielhaft in zwölf Zeitschritten, in dem ein Ausfall bei den Sensorsignalen erkannt worden ist. In der Darstellung der Figur 3 wird gezeigt, wie sich das Sensorsystem für die Zeit, in der der interne Ausfall vorliegt, verhält und daraufhin rekonfiguriert wird. Dabei stellen die dargestellten Zeitschritte k bis k+11 nur einen Abschnitt eines gesamten zeitlichen Funktionsablaufs dar. In der Figur 3 ist der erste Zeitschritt mit der Ziffer k, der zweite Zeitschritt mit der Ziffer k + 1 dargestellt. Weitere Zeitschritte sind in der Figur nicht dargestellt und werden bis zum elften, mit k + 10 bezeichneten Zeitschritt übergangen. Abschließend wird noch der Zeitschritt k + 11 dargestellt, in welchem das Sensorsystem im dargestellten Beispiel wieder den Ausgangszustand erreicht hat

Bei den die Sensorsystem-Zustände und Ausfallstati der Beobachter oder Filter in jedem Zeitschritt symbolisierenden Blöcken 51 wird der Ausfallstatus jeweils durch eine Wahrscheinlichkeitsgröße beschrieben, die eine Aussage darüber macht, mit welcher Wahrscheinlichkeit, die aufgrund einer vorbestimmten Zahl n letzter Messungen des Blocks ermittelt wird, von dem Systemmodell des Blocks richtige Messungen erzeugt wurden. Die Wahrscheinlichkeitsgröße kann vorteilhafterweise aus der Signifikanz gebildet werden. Die Signifikanz α der letzten n Messungen kann mit Hilfe der χ² (α, n)-Funktion, speziell insbesondere nach einem Gauss- oder Rechteck-Verfahren oder Voter-Monitor-Verfahren, und der vergangenen n Residuen bestimmt werden. Diese Funktion kann beispielsweise dem Buch Bronstein, Taschenbuch der Mathematik, 25. Auflage 1991, S. 680 entnommen werden. Erfindungsgemäß wird somit ein Ausfall nur in den letzten n Messungen gesucht. Somit spielt ein Sensor- oder Systemausfall beim erfindungsgemäßen Verfahren, der vor den letzten n Zeitschritten erfolgt ist, bei dem gegenwärtigen Ausfallstatus keine Rolle mehr. Bei bekannten Verfahren hingegen, bei denen die Abweichungszustände oder Residuen sämtlicher vergangener Zeitschritte mitberücksichtigt werden können, werden Sensorsignale oder das Systemmodell, die bereits wieder abweichungsfrei sind, möglicherweise immer noch als ausgefallen bewertet, so daß das gesamte System degradiert ist.

Zur Ermittlung des Ausfallstatus kann anstelle der Signifikanz auch die Wahrscheinlichkeitsdichte der letzten n Messungen verwendet werden. Die Ermittlung der Wahrscheinlichkeitsdichte befindet sich in der Druckschrift Bryson, A., Yu-Chi, H, Applied Optimal Control, 1975, auf den Seiten 388 und 389 und kann auf n Messungen angepaßt werden. Weiterhin kann eine Konfidenzschätzung des Systemzustandes, also eine Überprüfung ob der Systemzustand sich mit einer vorgegebenen Wahrscheinlichkeit in vorgegebenen Grenzen bewegt, über die letzten n Messungen verwendet werden um einen Ausfallstatus zu bestimmen. Die Methodik der Konfidenzschätzung befindet sich beispielsweise in dem Buch Bronstein, Taschenbuch der Mathematik, 25. Auflage 1991, S. 684-686. Es ist auch denkbar, daß weitere Ausfallerkennungsverfahren, wie z.B. ein Hypothesentest verwendet werden.

Erfindungsgemäß wird also eine Abweichungsmaßzahl und vorzugsweise eine Wahrscheinlichkeits-Größe oder -Kennzahl zur Bestimmung des Ausfallzustands verwendet. Dabei ist das wesentliche Kriterium, daß sich die Ausfallerkennung auf ein vorgegebenes Intervall von n Messungen bezieht. Dieses Intervall stellt den Zeitverzug dar, mit dem ein Ausfall erkannt wird. Die vorbestimmte Anzahl von Messungen für die erfindungsgemäße Ausfallstatus-Ermittlung kann variierbar oder einstellbar sein in Abhängigkeit z.B. vom Betriebszustand des Sensorsystems oder auch des Anwendungssystems oder je nach Anwendungsfall. Eine Einstellung der Anzahl n kann auch automatisch erfolgen. Beispielsweise kann in relativ kritischen Betriebszuständen die Anzahl n klein gegenüber unkritischen Betriebszuständen gewählt werden.

Zur Bewertung des Ausfallstatus werden erfindungsgemäß zwei Grenzen oder Schwellwerte definiert, mit denen der über die Wahrscheinlichkeit dem Ausfallstatus zugeordnete Ausfall-Status oder Ausfall-Zustand des jeweiligen Beobachters, d.h. Haupt- bzw. Unterbeobachters oder ersten bzw. weiteren Beobachters, bewertet wird. Ein erster Schwellwert (Diagnose-Schwellwert) bezieht sich darauf, ob sich in dem betreffenden Beobachter eine signifikante Abweichung aufbauen könnte. Ein zweiter Schwellwert (Ausfall-Schwellwert) legt fest, ob der betreffende Beobachter als ausgefallen bewertet wird.

In der Darstellung der Figur 3 werden Ausfallstati, die innerhalb, d.h. unterhalb des ersten Schwellwerts liegen, also ausfallfreie Beobachter bzw. Kombinationen, in denen sich auch keine Abweichung langsam aufbauen kann, mit "a" bezeichnet. Beobachter bzw. Kombinationen, deren Ausfallstati im Bereich zwischen dem ersten und dem zweiten Schwellwert liegen, werden mit "b" bezeichnet. Weiterhin werden in der Figur 3 Beobachter mit einem Ausfallstatus, der oberhalb der zweiten Grenze liegt, mit c bezeichnet und ausgekreuzt. Ein Beobachter mit einem solchen Fehlerstatus wird als ausgefallen eingestuft. Das Aufbauen einer Abweichung bezeichnet in diesem Zusammenhang das Vergrößern einer zunächst kleinen Abweichung über eine Mehrzahl von Zeitschritten.

Erfindungsgemäß arbeitet die Sensorfusion auf der Basis einer ersten Kombination aus zumindest einem Sensor und einem Systemmodell, solange der Ausfallstatus dort im mit a oder b beschriebenen Bereich liegt. Die erste Kombination aus zumindest einem Sensor und einem Beobachter wird im folgenden auch kurz Kombination genannt. Dabei kann diese erste Kombination auch eine Kombination eines zumindest einen Sensors und eines Systemmodells sein, auf den das Rekonfigurationsverfahren von dem Hauptbeobachter bereits umgeschaltet hat. D.h. der erste Beobachter bzw. die erste Kombination muß nicht der Hauptbeobachter bzw. die Hauptkombination oder die Kombination mit dem Hauptbeobachter sein. Die von der ersten Kombination ermittelten Systemzustände werden an die Datenverarbeitungseinrichtung 14, 24 gesandt. Auch kehrt zu dieser ersten Kombination die Beobachter-Bank oder eine weitere Kombination mit einem entsprechenden Beobachter immer dann zurück, wenn diese erste Kombination von einem anderen Bereich aus zu dem a- oder b-Bereich (d.h. die Abweichungen vergangener Zustände sind kleiner dem ersten oder zweiten Schwellwert) gelangt. Wenn die erste Kombination oder die jeweils aktive Kombination im a- oder b-Bereich liegt, wird also der Systemzustand derselben, d.h. werden die durch ihn errechneten Werte, nach außen zur Datenverarbeitungseinrichtung 14, 24 gegeben. Der erste oder auch der zweite Schwellwert kann als Gütekriterium des ermittelten Sensorwerts oder der verwendeten Sensoren oder Systemmodelle betrachtet werden oder kann auch als eine Genauigkeitsgrenze interpretiert werden, welche der Systemzustand erfüllen muß.

Im in der Figur 3 dargestellten Beispiel erreicht der Ausfallstatus einer ersten Kombination aus zumindest einem Sensor und einem Beobachter im Zeitschritt k + 1 den Wert b. Der Ausfallstatus liegt also zwischen der ersten und zweiten Grenze, d.h. zwischen dem Diagnose- und dem Ausfall-Schwellwert. Das erfindungsgemäße Sensorfusions-System interpretiert dieses Ereignis als Möglichkeit dafür, daß sich in der ersten Kombination oder der momentanen Hauptkombination eine signifikante Abweichung aufbauen könnte. Zu diesem Zeitpunkt, d.h. nach Überschreiten des Diagnose-Schwellwertes, wird die Beobachter-Bank, d.h. weitere verfügbare Kombinationen aus zumindest einem Sensor und zumindest einem Beobachter, aktiviert. Dies geschieht dadurch, daß eine Auswahl oder sämtliche weiteren Kombinationen aus zumindest einem Sensor und zumindest einem Beobachter - kurz gesagt weitere Beobachter oder Unterbeobachter - aktiviert werden und mit der ersten Kombination initialisiert werden. Initialisierung bezieht sich auf einen und vorzugsweise den gesamten Systemzustand, sowie die vergangenen n-1 Residuen, welche für die Bestimmung zukünftiger Ausfallstati von Bedeutung sind und von den aktivierten Beobachtern verwendet werden. Zum Zeitpunkt k + 1 wird jedoch lediglich eine Initialisierung und die Aktivierung vorgenommen, jedoch wird nach wie vor der Systemzustand, der vom Hauptbeobachter und nicht vom Unterbeobachter ermittelt worden ist, an die Datenverarbeitungseinrichtung 14, 24 geliefert.

Eine Aktivierung einer weiteren Kombination und damit eine De-Aktivierung der ersten Kombination mit einem Hauptbeobachter oder ersten Beobachter geschieht erfindungsgemäß erst dann, wenn der Ausfallstatus des ersten Beobachters über dem zweiten Grenzwert liegt. Dies geschieht in Figur 1 zum Zeitpunkt k + 10, bei welchem die erste Kombination einen Ausfallstatus c besitzt. Bei einem solchen Ereignis wird eine weitere Kombination 32 aus zumindest einem Sensor und einem Beobachter aktiviert, der zu diesem Zeitpunkt mindestens einen vorbestimmten Ausfallstatus besitzt. Vorzugsweise ist der vorbestimmte Ausfallstatus der günstigste der noch verfügbaren Kombinationen.

Falls insgesamt nur zwei Kombinationen oder nur noch eine weitere Kombination zur Verfügung stehen, kann nur die Aktivierung der zweiten Kombination erfolgen. Falls der Ausfallstatus dieser zweiten Kombination selbst über dem zweiten Schwellwert liegt, wird das Sensorsystem als ausgefallen eingestuft und eine entsprechende Fehlermeldung erzeugt. Falls nach dem Überschreiten des zweiten Schwellwertes durch eine erste Kombination mehrere weitere Kombinationen zur Verfügung stehen, kann die Auswahl der zu aktivierenden Kombination aufgrund einer vorbestimmten Reihenfolge oder danach erfolgen, welche Kombination zu einem vorbestimmten Zeitpunkt den besten Ausfallstatus besitzt. Dieser Zeitpunkt kann der Zeitpunkt des Überschreitens des zweiten Schwellwertes durch die jeweils erste Kombination oder ein anderer Zeitpunkt, z.B. der Ablauf eines vorgegebenen Zeitintervalls nach diesem Zeitpunkt, sein.

Dieses ist in dem in der Figur 3 gezeigten Beispiel der Beobachter oder Unterbeobachter, der die Signale der LINS und TRN verwendet. Es ist in dieser Situation somit ein GPS Sensorausfall erkannt worden. Hätte kein Unterbeobachter einen Ausfallstatus von a oder b, wäre der sehr unwahrscheinliche Fall eingetreten, daß alle Sensoren GPS, LINS und TRN ausgefallen sind und damit wäre die gesamte Beobachter-Bank oder sämtliche Kombination aus zumindest einem Sensor und einem Beobachter fehlerhaft. Damit kann eine Warnung nach außen gegeben werden, die besagt, daß die Ausgabe der Beobachter-Bank ausgefallen ist und somit die Integrität des Ausgangssignals nicht gewährleistet werden kann.

Im nächsten Zeitschritt wird dann der Hauptbeobachter durch den LINS/TRN- Beobachter reinitialisiert, d.h. der gegenwärtige Systemzustand und die vergangenen n-1 Residuen bzw. Wahrscheinlichkeits-Kennzahlen des Hauptbeobachters werden mit den Werten des auf der Basis von LINS und TRN arbeitenden Unterbeobachters bzw. der Residuen, welche der LINS/TRN Beobachter bei seiner Initialisierung erhalten hat, überschrieben. Da in diesem Beispiel der dann ermittelte Ausfallstatus des Hauptbeobachters den Wert a hat und damit angenommen wird, daß sich im Hauptbeobachter keine Abweichung aufbauen kann, die die notwendige (spezifizierte) Genauigkeit überschreitet, wird die Beobachter-Bank deaktiviert. Hätte der Hauptbeobachter einen Ausfallstatus b würde dies im Schritt k+11 zu einer erneuten Aktivierung der Beobachter-Bank führen. In diesem Fall würden die restlichen Unterbeobachter im Schritt k+11 von den Werten des LINS/TRN- Unterbeobachters initialisiert. Hätte der Hauptbeobachter einen Ausfallstatus c, würde dann sofort nach Aktivierung der Beobachter-Bank auf den besten Unterbeobachter mit dem Ausfallstatus a oder b umgeschaltet. Wie im Zeitschritt k+10 gilt auch, daß wenn kein Unterbeobachter einen Ausfallstatus von a oder b hat, ist der sehr unwahrscheinliche Fall eingetreten, daß alle Sensoren GPS, LINS und TRN ausgefallen sind und damit wäre die gesamte Beobachter Bank ausgefallen. Damit kann eine Warnung nach außen gegeben werden, die besagt, daß die Ausgabe der Beobachter-Bank ausgefallen ist und somit die Integrität des Ausgangssignals nicht gewährleistet werden kann.

Durch das erfindungsgemäße Verfahren wird also erreicht, daß auch bei zeitweise auftretenden Sensorausfällen oder Systemmodellfehlem, korrekte Sensorsignale oder Systemmodelle vor und nach dem Sensorfehler oder Systemfehler nicht verworfen werden. Korrekte Sensorsignale oder Systemmodelle vor dem internen Ausfall werden verwendet, da vor dem interne Ausfall immer auf Basis des Hauptfilters gearbeitet wird. Da die Beobachter-Bank auf den Hauptbeobachter umschaltet, sobald die Wahrscheinlichkeits-Kennzahlen oder Residuen der letzten n Zeitschritte einen Ausfallstatus a oder b ergeben, werden korrekte Sensorsignale und Systemmodellen nach dem internen Ausfall verwendet.

Da in einem als ausgefallen eingestuften Hauptbeobachter dessen vergangene n-1 Residuen überschrieben werden mit den Residuen desjenigen Unterbeobachters, der die jeweils günstigste Wahrscheinlichkeits-Kennzahl aufweist, bezieht sich die Bestimmung des Ausfallstatus immer auf eine vorbestimmte Zahl n letzter als korrekt erachteter Beobachter-Residuen.

Wesentlich an dem erfindungsgemäßen Verfahren ist, daß zur Ermittlung des Ausfallzustands lediglich die absolute Abweichung von aus einer zeitlichen Abfolge von Sensorwerten von den mittels zumindest eines Systemsmodells ermittelten Werte verwendet wird. Dadurch werden sowohl Ausfälle, die der Sensorik (Hardware wie Software) zuzuordnen sind, als auch Abweichungen, die dem Systemmodell zuzuordnen sind, erkennbar.

Das erfindungsgemäße Verfahren kann auf jedes auf Beobachter basierende Sensorsystem angewendet werden, wobei die im beschriebenen Ausführungsbeispiel genannten Sensoren, also LINS, GPS und TRN durch andere Sensoren, Sensorkombinationen und Systemmodelle ersetzt werden. Beispiele für solche Anwendungsgebiete sind in den Figuren 1 und 2 dargestellt worden.

## Patentansprüche

1. Rekonfigurations-Verfahren, das zur Implementierung in ein Computersystem vorgesehen ist, zur Kompensation von Ausfällen eines Sensorsystems (1) mit zumindest zwei Beobachtern, die jeweils aus zumindest einem Sensor (2; 50) zur Messung (12, 22) von System-Zuständen eines Anwendungssystems (11, 21) und zumindest einem Systemmodell (4) zur Schätzung von System-Zustanden des Anwendungssystems gebildet werden, um Systemzustände einer zugeordneten Datenverarbeitungseinrichtung (14, 24) mit einer vorbestimmten Zuverlässigkeit bereitzustellen,
wobei für einen ersten Beobachter Ausfallzustände aus Abweichungswerten ermittelt werden, die sich aus dem Vergleich einer Anzahl von mittels des zumindest einen Sensors gemessenen Zuständen mit einem mittels des Systemmodells geschätzten Zustand ergeben,
**dadurch gekennzeichnet,**
- **dass** bei Erreichen eines ersten Schwellwertes für die Abweichungen zumindest ein weiterer Beobachter mit einer Anzahl von für zeitlich zurückliegende Zeitschritte gebildeten Abweichungen zur Bestimmung des Ausfallzustands des weiteren Beobachters initialisiert wird,
- **dass** die von dem weiteren Beobachter ermittelten Systemzustände zur Weiterverarbeitung durch die Datenverarbeitungseinrichtung (14, 24) an diesselbe geschickt werden, sobald der erste Beobachter einen zweiten Schwellwert erreicht hat.

2. Rekonfigurations-Verfahren nach dem Anspruch 1, **dadurch gekennzeichnet, dass** beim Überschreiten des ersten Schwellwertes durch den ersten Beobachter derjenige weitere Beobachter ausgewählt wird, der die geringsten Abweichungen der System-Zustände Ober einen vorbestimmten vergangenen Zeitraum hinweg aufweist.

3. Rekonfigurations-Verfahren nach dem Anspruch 1, **dadurch gekennzeichnet, dass** beim Überschreiten des ersten Schwellwertes durch den ersten Beobachter der weitere Beobachter nach einer vorbestimmten Reihenfolge ausgewählt wird.

4. Rekonfigurations-Verfahren nach einem der voranstehenden Ansprüche, **dadurch gekennzeichnet, dass** die erste Kombination von der weiteren Kombination initialisiert wird und Systemzustände zur Weiterverarbeitung durch die Datenverarbeitungseinrichtung (14, 24) an diesselbe schickt, sobald die erste Kombination den ersten Schwellwert unterschreitet.

5. Rekonfigurations-Venahren nach einem der voranstehenden Ansprüche, **dadurch gekennzeichnet, dass** die Ermittlung der Abweichungen mittels einer Konfidenzschätzung erfolgt.

6. Rekonfigurations-Verfahren nach dem Anspruch 5, **dadurch gekennzeichnet, dass** die Ermittlung der Konfidenzschätzung mittels eines Gauss- der eines Rechteck-Verfahrens erfolgt.

7. Sensorsystem zur Bestimmung von äußeren Zuständen eines Anwendungssystems (11) und deren Bereitstellung an ein zugeordnetes Datenverarbeitungseinrichtung (14), das umfasst:
- ein Sensorsystem (1) zumindest zwei Beobachter (6) mit jeweils zumindest einem Sensor (2; 50) zur Messung (12, 22) von System-Zuständen eines Anwendungssystems (11, 21) und mit zumindest einem Systemmodell (4) zur Schätzung von System-Zuständen des Anwendungssystems zur Bereitstellung von Systemzuständen einer zugeordneten Datenverarbeitungseinrichtung (14, 24) mit einer vorbestimmten Zuverlässigkeit,
- eine Berechnungseinheit (8) mit Funktionen, mit denen für einen ersten Beobachter Ausfallzustände aus Abweichungswerten ermittelt werden, die sich aus dem Vergleich einer Anzahl von mittels des zumindest einen Sensors gemessenen Zuständen mit einem mittels des Systemmodells geschätzten Zustand ergeben,
**dadurch gekennzeichnet, dass** die Berechnungseinheit (8) weiterhin Funktionen aufweist, mit denen
- bei Erreichen eines ersten Schwellwertes für die Abweichungen zumindest ein weiterer Beobachter mit einer Anzahl von für zeitlich zurückliegende Zeitschritte gebildeten Abweichungen zur Bestimmung des Ausfallzustands des weiteren Beobachters initialisiert werden kann,
- die von dem weiteren Beobachter ermittelten Systemzustände zur Weiterverarbeitung durch die Datenverarbeitungseinrichtung (14, 24) an diesselbe geschickt werden können, sobald der erste Beobachter einen zweiten Schwellwert erreicht hat.

8. Sensorsystem zur Bestimmung von äußeren Zuständen eines Anwendungssystems (11) nach dem Anspruch 7, **dadurch gekennzeichnet, dass** das Anwendungssystem ein Fahrzeug ist.

9. Sensorsystem zur Bestimmung von äußeren Zuständen eines Anwendungssystems (11) nach dem Anspruch 7 oder 8, **dadurch gekennzeichnet, dass** als äußerer Zustand die Position oder die Lage des Fahrzeugs im Raum verwendet wird.

10. Sensorsystem zur Bestimmung von äußeren Zuständen eines Anwendungssystems (11) nach dem Anspruch 7, 8, 9 oder 10, **dadurch gekennzeichnet, dass** das Sensorsystem ein Luftdatensystem ist.

11. Sensorsystem zur Bestimmung von Betriebs-Zuständen eines Anwendungssystems (21) und deren Bereitstellung an ein zugeordnetes Datenverarbeitungseinrichtung (24), wobei das Sensorsystem (1) zumindest einen Satz von Beobachtern (6) mit zumindest einem Sensor (2) und einem Systemmodell für das Anwendungssystems (11) aufweist, in dem Funktionen zur Durchführung der Verfahrensschritte nach einem der Ansprüche 1 bis 7 vorgesehen sind.

12. Sensorsystem zur Bestimmung von Betriebs-Zuständen eines Anwendungssystems (11) nach dem Anspruch 11, **dadurch gekennzeichnet, dass** das Anwendungssystem ein Stellsystem ist und die Betriebszustände die Position und/oder die Geschwindigkeit eines Servoventils oder Aktuators ist.

13. Sensorsystem zur Bestimmung von Betriebs-Zuständen eines Anwendungssystems (11) nach dem Anspruch 11, **dadurch gekennzeichnet, dass** das Anwendungssystem ein Stellsystem ist und die Betriebszustände Drücke sind.

14. Sensorsystem zur Bestimmung von Betriebs-Zuständen eines Anwendungssystems (11) nach dem Anspruch 11, **dadurch gekennzeichnet, dass** das Anwendungssystem ein chemisches System ist und die Betriebszustände eine Reaktionstemperatur, eine Konzentration von miteinander reagierenden Stoffen oder Drücke sind.

15. Sensorsystem zur Bestimmung von Betriebs-Zustanden eines Anwendungssystems (11) nach dem Anspruch 11. **dadurch gekennzeichnet, dass** das Anwendungssystem ein elektrisches System ist und die Betriebszustände Ströme, Spanungen, Kapazitäten oder stoffliche Eigenschaften sind.

16. Sensorsystem zur Bestimmung von äußeren Zuständen eines Anwendungssystems (11) nach einem der Ansprüche 7 bis 15, **dadurch gekennzeichnet, dass** die Datenverarbeitungseinrichtung (14) ein Monitor ist.

## Claims

1. Reconfiguration method provided for implementation in a computer system, for compensating failures of a sensor system (1) comprising at least two monitoring means which, respectively, consist of at least one sensor (2; 50), for measuring (12, 22) system states of an application system (11, 21), and of at least one system model (4), for estimating system states of the application system, in order to provide system.states to an assigned data processing device (14, 24) with a predefined reliability, wherein, for a first monitoring means, failure states are ascertained from deviation values which result from the comparison of a number of states measured by means of the at least one sensor with a state estimated by means of the system model,
**characterized in that**
- upon attainment of a first threshold value for the deviations, at least one further monitoring means is initialized with a number of deviations produced for previous time steps, for the purpose of determining the failure state of the further monitoring means,
- as soon as the first monitoring means has attained a second threshold value, the system states ascertained by the further monitoring means are sent to the data processing device (14, 24) for further processing by the latter.

2. Reconfiguration method according to Claim 1, **characterized in that**, upon the first threshold value being exceeded by the first monitoring means, the further monitoring means is selected that has the smallest deviations of the system states beyond a predefined past period of time.

3. Reconfiguration method according to Claim 1, **characterized in that**, upon the first threshold value being exceeded by the first monitoring means, the further monitoring means is selected according to a predefined sequence.

4. Reconfiguration method according to any one of the preceding Claims, **characterized in that**, as soon as the first combination falls below the first threshold value, the first combination is initialized by the further combination and sends system states to the data processing device (14, 24), for further processing by the latter.

5. Reconfiguration method according to any one of the preceding Claims, **characterized in that** the deviations are ascertained by means of a confidence estimation.

6. Reconfiguration method according to Claim 5, **characterized in that** the confidence estimation is ascertained by means of a Gaussian - rectangle - method.

7. Sensor system for determining external states of an application system (11) and providing them to an assigned data processing device (14), the sensor system comprising:
- a sensor system (1), at least two monitoring means (6) comprising, respectively, at least one sensor (2; 50), for measuring (12, 22) system states of an application system (11, 21), and at least one system model (4), for estimating system states of the application system, in order to provide system states to an assigned data processing device (14, 24) with a predefined reliability,
- a computing unit (8) having functions by means of which, for a first monitoring means, failure states are ascertained from deviation values which result from the comparison of a number of states measured by means of the at least one sensor with a state estimated by means of the system model,
**characterized in that** the computing unit (8) furthermore has functions by means of which
- upon attainment of a first threshold value for the deviations, at least one further monitoring means can be initialized with a number of deviations produced for previous time steps, for the purpose of determining the failure state of the further monitoring means,
- as soon as the first monitoring means has attained a second threshold value, the system states ascertained by the further monitoring means are sent to the data processing device (14, 24) for further processing by the latter.

8. Sensor system for determining external states of an application system (11), according to Claim 7, **characterized in that** the application system is a vehicle.

9. Sensor system for determining external states of an application system (11), according to Claim 7 or 8, **characterized in that** the position or attitude of the vehicle in space is used as an external state.

10. Sensor system for determining external states of an application system (11), according to Claim 7, 8, 9 or 10, **characterized in that** the sensor system is an air data system.

11. Sensor system for determining operating states of an application system (21) and providing them to an assigned data processing device (24), wherein the sensor system (1) has at least one set of monitoring means (6), comprising at least one sensor (2) and one system model for the application system (11), in which set of monitoring means functions are provided for executing the method steps according to any one of Claims 1 to 7.

12. Sensor system for determining operating states of an application system (11), according to Claim 11, **characterized in that** the application system is an actuating system and the operating states are the position and/or the speed of a servo-valve or actuator.

13. Sensor system for determining operating states of an application system (11), according to Claim 11, **characterized in that** the application system is an actuating system and the operating states are pressures.

14. Sensor system for determining operating states of an application system (11), according to Claim 11, **characterised in that** the application system is a chemical system and the operating states are a reaction temperature, a concentration of mutually reactive substances, or pressures.

15. Sensor system for determining operating states of an application system (11), according to Claim 11, **characterized in that** the application system is an electrical system and the operating states are currents, voltages, capacitances or material properties.

16. Sensor system for determining external states of an application system (11), according to any one of Claims 7 to 15, **characterized in that** the data processing device (14) is a monitor.

## Revendications

1. Procédé de reconfiguration, prévu pour l'implémentation dans un système informatique, pour la compensation de défaillances d'un système de capteurs (1) avec au moins deux observateurs, qui sont respectivement formés d'au moins un capteur (2 ; 50) pour la mesure (12, 22) d'états d'un système d'application (11, 21) et d'au moins un modèle de système (4) pour l'appréciation d'états du système d'application, en vue de fournir des états du système à un dispositif de traitement des données associé (14, 24) avec une fiabilité prédéfinie,
des états de défaillance pour un premier observateur étant déterminés à partir de valeurs d'écarts, qui résultent de la comparaison entre un nombre d'états mesurés au moyen du au moins un capteur et un état apprécié au moyen du modèle de système,
**caractérisé en ce que**
- lorsqu'une première valeur de seuil est atteinte pour les écarts, au moins un autre observateur avec un nombre d'écarts formés pour des phases de temps en recul temporel est initialisé pour la détermination de l'état de défaillance de l'autre observateur,
- les états du système déterminés par l'autre observateur sont transmis au dispositif de traitement des données (14, 24) pour traitement ultérieur par ce dernier, dès que le premier observateur a atteint une seconde valeur de seuil.

2. Procédé de reconfiguration suivant la revendication 1, **caractérisé en ce que**, lors du dépassement par le haut de la première valeur de seuil par le premier observateur, l'autre observateur, qui présente les écarts minimaux des états du système par-dessus une période passée prédéfinie, est sélectionné.

3. Procédé de reconfiguration suivant la revendication 1, **caractérisé en ce que**, lors d'un dépassement par le haut de la première valeur de seuil par le premier observateur, l'autre observateur est sélectionné suivant un ordre prédéfini.

4. Procédé de reconfiguration suivant l'une des revendications précédentes, **caractérisé en ce que** la première combinaison est initialisée par l'autre combinaison et des états du système sont transmis au dispositif de traitement des données (14, 24) pour traitement ultérieur par ce dernier, dès que la première combinaison dépasse par le bas la première valeur de seuil.

5. Procédé de reconfiguration suivant l'une des revendications précédentes, **caractérisé en ce que** la détermination des écarts s'effectue au moyen d'une appréciation de confiance.

6. Procédé de reconfiguration suivant la revendication 5, **caractérisé en ce que** la détermination de l'appréciation de confiance s'effectue au moyen d'un procédé de distribution gaussienne ou rectangulaire.

7. Système de capteurs pour la détermination d'états extérieurs d'un système d'application (11) et pour leur transmission à un dispositif de traitement des données associé (14), comprenant :
- un système de capteurs (1) d'au moins deux observateurs (6) avec chacun au moins un capteur (2 ; 50) pour la mesure (12, 22) d'états d'un système d'application (11, 21) et avec au moins un modèle de système (4) pour l'appréciation d'états du système d'application en vue de fournir des états de système à un dispositif de traitement des données associé (14, 24) avec une fiabilité prédéfinie,
- une unité de calcul (8) avec des fonctions par lesquelles sont déterminés pour un premier observateur des états de défaillance à partir de valeurs d'écarts, qui résultent de la comparaison entre un nombre d'états mesurés au moyen du au moins capteur et un état apprécié au moyen du modèle de système,
**caractérisé en ce que** l'unité de calcul (8) présente en outre des fonctions par lesquelles,
- lorsqu'une première valeur de seuil est atteinte pour les écarts, au moins un autre observateur avec un nombre d'écarts formés pour des phases de temps en recul temporel peut être initialisé pour la détermination de l'état de défaillance de l'autre observateur,
- les états du système déterminés par l'autre observateur peuvent être transmis au dispositif de traitement des données (14, 24) pour traitement ultérieur par ce dernier, dès que le premier observateur a atteint une seconde valeur de seuil.

8. Système de détecteurs pour la détermination d'états extérieurs d'un système d'application (11) suivant la revendication 7, **caractérisé en ce que** le système d'application est un véhicule.

9. Système de capteurs pour la détermination d'états extérieurs d'un système d'application (11) suivant l'une des revendications 7 et 8, **caractérisé en ce que** la position ou la situation du véhicule dans l'espace est utilisée en tant qu'état extérieur.

10. Système de capteurs pour la détermination d'états extérieurs d'un système d'application (11) suivant la revendication 7, 8, 9 ou 10, **caractérisé en ce que** le système de capteurs est un système de données aériennes.

11. Système de capteurs pour la détermination d'états de fonctionnement d'un système d'application (21) et de leur transmission à un dispositif de traitement des données associé (24), le système de capteurs (1) présentant au moins un jeu d'observateurs (6) avec au moins un capteur (2) et un modèle de système pour le système d'application (11), dans lequel sont prévues des fonctions pour la mise en oeuvre des phases de procédé suivant l'une des revendications 1 à 7.

12. Système de capteurs pour la détermination d'états de fonctionnement d'un système d'application (11) suivant la revendication 11, **caractérisé en ce que** le système d'application est un système de réglage et les états de fonctionnement sont la position et/ou la vitesse d'une servosoupape ou actuateur.

13. Système de capteurs pour la détermination d'états de fonctionnement d'un système d'application (11) suivant la revendication 11, **caractérisé en ce que** le système d'application est un système de réglage et les états de fonctionnement sont des pressions.

14. Système de capteurs pour la détermination d'états de fonctionnement d'un système d'application (11) suivant la revendication 11, **caractérisé en ce que** le système d'application est un système chimique et les états de fonctionnement sont une température de réaction, une concentration de substances réagissant entre elles ou des pressions.

15. Système de capteurs pour la détermination d'états de fonctionnement d'un système d'application (11) suivant la revendication 11, **caractérisé en ce que** le système d'application est un système électrique et les états de fonctionnement sont des courants, des tensions, des capacités ou propriétés de matières.

16. Système de capteurs pour la détermination d'états extérieurs d'un système d'application (11) suivant l'une des revendications 7 à 15, **caractérisé en ce que** le dispositif de traitement des données (14) est un moniteur.
